# EUROPEAN PATENT SPECIFICATION

(11) **EP 2 447 348 B1**
(45) Date of publication and mention of the grant of the patent: **07.03.2018**
(21) Application number: 10792044.9
(22) Date of filing: 21.06.2010
(51) Int. Cl.: C10M 169/02, C10M 107/02, C10M 117/04, C10M 117/06, C10M 127/00, C10M 135/18, F16C 33/66, C10N 10/02, C10N 10/04, C10N 20/00, C10N 20/02, C10N 30/06, C10N 40/02, C10N 50/10

(54) **GREASE COMPOSITION**
SCHMIERFETTZUSAMMENSETZUNG
COMPOSITION DE GRAISSE

(30) Priority: 22.06.2009 JP 2009147619
(43) Date of publication of application: 02.05.2012
(73) Proprietor: Idemitsu Kosan Co., Ltd., Chiyoda-ku Tokyo 100-8321 (JP)
(72) Inventor: FUJINAMI Yukitoshi, Ichihara-shi Chiba 299-0107 (JP)
(74) Representative: Hoffmann Eitle
(86) International application number: PCT/JP2010/060438
(87) International publication number: WO 2010/150726

(56) References cited:
- EP-A1- 1 972 681
- WO-A1-2009/074577
- JP-A- 9 003 466
- JP-A- 62 270 698
- JP-A- 2001 003 074
- JP-A- 2001 101 943
- JP-A- 2003 201 492
- JP-A- 2003 343 581
- JP-A- 2004 018 725
- JP-A- 2004 339 245
- JP-A- 2006 342 359
- JP-A- 2007 112 998
- US-A1- 2004 242 334

## Description

### TECHNICAL FIELD

The present invention relates to a grease composition. In particular, the present invention relates to a grease composition usable for a main bearing that receives a main shaft incorporated in a wind power generator and a pitch bearing that receives a blade shaft.

### BACKGROUND ART

A grease composition is used to lubricate a bearing that receives a large load, such as a main bearing that receives a main shaft incorporated in a wind power generator and a pitch bearing that receives a blade shaft. Such a main bearing and a pitch bearing are always subjected to fluctuations or slight vibrations due to a change in wind speed or slight control of the blade. In other words, a main bearing and a pitch bearing are in conditions that fretting wear thereof easily occurs. Since replacement of a malfunctioned bearing takes a lot of time and costs, what has been sought is a lubricant having an excellent fretting wear resistance and a long-lasting effect in the prevention of damage to a bearing.

For improving fretting wear resistance, there has been suggested a grease composition whose base oil is an ester synthetic oil having a kinematic viscosity of 200 to 2500 mm²/s at 100 degrees C (see Patent Literature 1).

Additionally, for improving durability against a large load, it has been disclosed to use a high viscosity base oil for a grease composition and to blend an extreme pressure agent in the grease composition as needed (see Non-patent Literatures 1 and 2).

As a grease composition usable for a wind power generator, the following compositions have been suggested: a composition containing a base oil, a thickener, and oleoyl sarcosine (see Patent Literature 2); and a composition containing a base oil having a kinematic viscosity of 70 to 250 mm²/s at 40 degrees C, a thickener, and a carboxylic antirust additive (see Patent Literature 3).

Patent Literature 4 describes an electric power steering device for transmitting a rotation of a motor for assisting operation of steering which is reduced via a reduction gear to a steering mechanism, which includes: a male type joint member and a female type joint member which are jointed each other for transmitting the rotation of the motor to the reduction gear; and lubricant including base oil having kinetic viscosity of 1000 to 5000 mm²/s at 40 °C, a worked penetration of which is not more than 300, and which is charged between the male type joint member and the female type joint member.

Patent Literature 5 describes a telescopic shaft for vehicle steering installed in a vehicle steering shaft. A grease composition which has an apparent viscosity of 400 to 750 Pa · s (25°C) at a shear rate of 10 s⁻¹ as defined in JIS K2220 is enclosed in a gap between the outer peripheral portion of the male shaft and the inner peripheral portion of the female shaft.

Patent Literature 6 describes a grease formulation containing a thickener and a Fischer-Tropsch derived base oil, in particular a heavy or extra heavy base oil. The use of a Fischer-Tropsch oil is said to result in an increase in thickener concentration and in improved properties such as anti-wear and copper corrosion performance.

Patent Literature 7 aims at providing a grease composition capable of improving an initial sound of a bearing (noise of a ball bearing cage), when the bearing starts to operate in a low-temperature atmosphere, and that is effective for reducing fretting damage (wear) of the bearing and reducing torque thereof. The document further aims at providing a rolling unit having excellent low-temperature sound characteristics and capable of being reduced in the fretting damage (wear) and the torque. As a solution to these problems, the document suggests compounding a grease composition from a base oil and a metal soap-based thickener, wherein the base oil is formed by mixing a lubricating oil having a polar group in its molecular structure with a nonpolar lubricating oil, and the metal soap-based thickener contains a fibrous material of which the major axis is at least 3 µm in length.

Patent Literature 8 wishes to provide a switch for a cable way which can maintain long term operation reliability by employing a grease having improved aging properties and decrease contact resistance of a current carrying part to reduce power loss. The grease contains at least one synthetic oil as base oil selected from the group consisting of poly α-olefin and di-alkyl-phenyl ether, and 5 to 30 mass % of a urea compound as a thickening agent. The kinetic viscosity of the base oil is 30 to 500 mm²/s at 40°C.

Patent Literature 9 aims at providing a grease having low-temperature performance and lubricity, exhibiting no significant attack on plastics and suitable for use in acoustic equipment, by blending a base oil composed of a purified mineral oil and two kinds of α-olefin polymer oils having different kinetic viscosities from each other with a solid lubricant, a polymer adhesive, and a thickener. A base oil is obtained by blending 12-40% wt.-%; of purified oil having a kinematic viscosity of 135-352 cst as determined at 40°C with 8-25% C₆₋₁₂ α-olefin polymer oil having a kinematic viscosity of 17-60 cst as determined at 40°C and 35-60% C₆₋₁₂ -olefin oil having a kinetic viscosity of 150-450 cst as determined at 40 deg.C in certain weight ratios, which is then further blended with 0.5-5% mixture (B) comprising a solid lubricant (e.g., MoS₂) and 0.1-3% polymer adhesive (e.g., polymethacrylate) and 1-15% thickener comprising a quaternary ammonium salt-treated bentonite.

Patent Literature 10 aims at obtaining a grease composition having performances even under high-speed and high-temperature conditions, and at providing a rolling apparatus having lubricity and a long life even under high-temperature conditions. The rolling apparatus is obtained by filling a grease composition comprising a diurea compound and a fluororesin as a thickener and a synthetic oil and a perfluoropolyether oil as a base oil in a cavity part of a ball bearing. The diurea compound consists essentially of a compound prepared by reacting a cyclohexylamine with a diisocyanate.

### CITATION LIST

### PATENT LITERATURES

- Patent Literature 1: JP-A-2003-206939
- Patent Literature 2: JP-A-2008-38088
- Patent Literature 3: JP-A-2007-63423
- Patent Literature 4: US 2004/242334
- Patent Literature 5: EP 1 972 681 A1
- Patent Literature 6: WO 2009/074577 A1
- Patent Literature 7: JP-A-2003-201492
- Patent Literature 8: JP-A-2001-101943
- Patent Literature 9: JP-A-62-270698
- Patent Literature 10: JP-A-2004-339245

### NON-PATENT LITERATURES

Non-patent Literature 1 "Evaluation of Fretting Protection Property of Lubricating Grease Applied to Thrust Ball Bearing", Tribologists, Vol. 54, No.1, (2009) 64
Non-patent Literature 2 "Fretting Wear Performance of Lithium 12-Hydroxystearate Greases for Thrust Ball Bearing in Reciprocating Motion", Tribologists, Vol.42, No.6, (1997) 492

### SUMMARY OF THE INVENTION

### PROBLEMS TO BE SOLVED BY THE INVENTION

Main bearing and pitch bearing used in a wind power generator simultaneously require reduction in fretting wear due to rotation of main shaft and blade shaft and reduction in bearing wear due to the heavy weights of the main shaft and blade shaft received on the main bearing and pitch bearing, respectively. Even with the grease compositions disclosed in Patent Literatures 1 to 3 and Non-patent Literatures 1 and 2, such bearing wear and fretting wear are unlikely to be simultaneously suppressed. Additionally, using a high viscosity base oil leads to an increase in fretting wear.

An object of the invention is to provide a grease composition capable of simultaneously suppressing bearing wear caused under a high-load condition and fretting wear to provide a longer lifetime.

### MEANS FOR SOLVING THE PROBLEMS

In order to solve the above problem, the grease composition as defined in the claims is provided.

The grease composition according to the above aspect of the invention is capable of simultaneously suppressing bearing wear caused under a high-load condition and fretting wear to provide a longer lifetime, and thus is suitably usable for, in particular, a main bearing and a pitch bearing in a wind power generator.

### BRIEF DESCRIPTION OF DRAWING

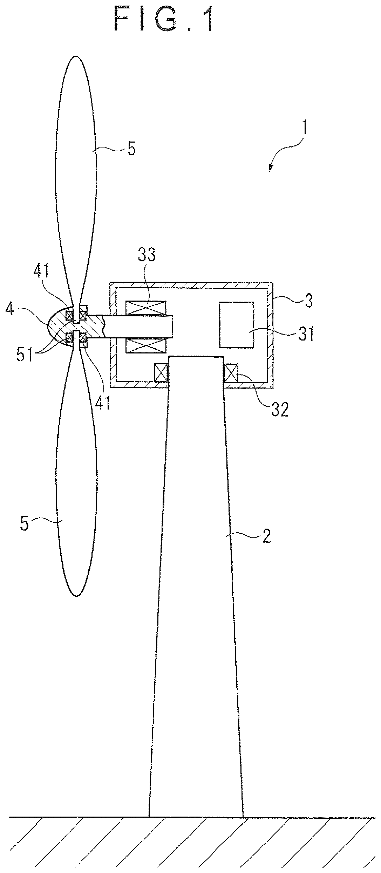

Fig. 1 shows a wind power generator that uses a grease composition according to an exemplary embodiment of the invention.

### DESCRIPTION OF EXEMPLARY EMBODIMENT

An exemplary embodiment of the invention will be described below in detail.

A grease composition according to the exemplary embodiment (hereinafter also abbreviated as "grease") includes a base oil and a thickener, as defined in claim 1.

The base oil comprises a hydrocarbon-based synthetic oil. It may comprise a combination of hydrocarbon-based synthetic oil and mineral oil.

When the hydrocarbon-based synthetic oil is an aromatic oil, examples thereof include alkylbenzenes such as monoalkylbenzene and dialkylbenzene, and alkylnaphthalenes such as monoalkylnaphthalene, dialkylnaphthalene and polyalkylnaphthalene. When the hydrocarbon-based synthetic oil is an ester oil, examples thereof include diester oils such as dibutyl sebacate, di-2-ethylhexyl sebacate, dioctyl adipate, diisodecyl adipate, ditridecyl adipate, ditridecyl glutarate and methyl/acetyl ricinoleate, aromatic ester oils such as trioctyl trimellitate, tridecyl trimellitate and tetraoctyl pyromellitate, polyol ester oils such as trimethylol propane caprylate, trimethylol propane peralgonate, pentaerythritol-2-ethylhexanoate and pentaerythritol peralgonate, and complex ester oils (oligoesters of polyhydric alcohol and dibasic or monobasic mixed fatty acid). When the hydrocarbon-based synthetic oil is an ether oil, examples thereof include polyglycols such as polyethylene glycol, polypropylene glycol, polyethylene glycol monoether and polypropylene glycol monoether, phenyl ether oils such as monoalkyl triphenyl ether, alkyldiphenyl ether, dialkyldiphenyl ether, pentaphenyl ether, tetraphenyl ether, monoalkyl tetraphenyl ether and dialkyl tetraphenyl ether, olefin oligomers such as normal paraffin, isoparafin, polybutene, polyisobutylene, 1-decene oligomer, and co-oligomer of 1-decene and ethylene.

Usable mineral oils are ones that have been subjected to an appropriate combination of the following purification processes: vacuum distillation, oil deasphalting, solvent extraction, hydrocracking, solvent dewaxing, sulfate cleaning, clay purification, hydrorefining and the like.

The above hydrocarbon-based synthetic oils may be used singularly or in combination. The kinematic viscosity of the base oil is in a range from 200 mm²/s to 2000 mm²/s at 40 degrees C. When the kinematic viscosity is less than 200 mm²/s, fretting wear is reduced but bearing wear is increased, so that load bearing capacity is unlikely to be ensured. On the other hand, when the kinematic viscosity is more than 2000 mm²/s, fretting wear is likely to be increased. In view of the above, the kinematic viscosity at 40 degrees C is preferably in a range from 300 mm²/s to 1500 mm²/s, more preferably in a range from 400 mm²/s to 750 mm²/s.

The blend ratio of the hydrocarbon-based synthetic oil in the base oil is 40 mass% or more. When the blend ratio of the hydrocarbon-based synthetic oil in the base oil is less than 40 mass%, it can be difficult to provide both high viscosity and low-temperature torque performance. In view of the above, the blend ratio of the hydrocarbon-based synthetic oil in the base oil is preferably 60 mass% or more, more preferably 70 mass% or more.

The base oil contains a component having a kinematic viscosity of 10 - 40 mm²/s or less at 40 degrees C (component A). The blend ratio of the component A is in a range from 20 mass% to 70 mass%. When the kinematic viscosity of the component A in the base oil is small, a large amount of the base oil is likely to be evaporated during the production process. On the other hand, when the kinematic viscosity of the component A is more than 70 mm²/s, fretting wear is likely to be increased. In view of the above, the kinematic viscosity of the component A in the base oil at 40 degrees C is in a range from 10 mm²/s to 40 mm²/s, preferably in a range from 20 mm²/s to 40 mm²/s.

When the blend ratio of the component A in the base oil is less than 20 mass%, fretting wear and pumpability are likely to be worsened. When the blend ratio of the component A is more than 70 mass%, the base oil is unlikely to be controlled to have high viscosity. In view of the above, the blend ratio of the component A in the base oil is preferably in a range from 30 mass% to 70 %mass, more preferably in a range from 40 mass% to 65 mass%.

The component A in the base oil is an olefin oligomer or a mixture of olefin oligomers. Examples include an oligomer of alpha-olefins having 4 to 18, preferably 6 to 14, more preferably 8 to 12 carbon atoms (either singular or combined) and a co-oligomer of 1-decene and ethylene. One of the above olefin oligomers may be used or, alternatively, a mixture thereof may be used. The above olefin oligomers may be composited in a known method or in a method as disclosed in any one of Japanese Patent Application No. 5-282511 (JP-A-07-133234) and Japanese Patent Application No. 1-269082 (JP-A-03-131612). The component A may be blended with a small amount of mineral oil without negatively affecting the low temperature properties.

The grease composition of the present invention comprises a soap thickener that is blended with the base oil. Specifically, the thickener is preferably any one of Li soap, Li complex soap, Ca sulfonate complex soap and Ca complex soap, more preferably a soap containing a 12-hydroxystearate as a fatty acid. Among the above examples, the thickener is preferably a soap containing Li, more preferably a Li complex soap. A Li complex soap is excellent in performance balance from a low temperature to a high temperature.

The blend ratio of the thickener is 17 mass% or less of the total amount of the composition. When the blend ratio of the thickener is more than 17 mass% or more of the total amount of the composition, fretting wear is likely to be worsened. Additionally, the pumpability is also likely to be lowered. In view of the above, the blend ratio of the thickener relative to the total amount of the composition is more preferably 14 mass% or less, particularly preferably 12 mass% or less.

The blend ratio of the thickener is represented as the amount of a carboxylic acid constituting the thickener.

The thickener is preferably produced by mixing carboxylic acid and alkali together in the component A of the base oil for saponification.

Examples of the carboxylic acid include wild fatty acids from which glycerin has been removed by hydrolyzing fat and oil, monocarboxylic acids such as a stearic acid, monohydroxy carboxylic acids such as a 12-hydroxy stearic acid, dibasic acids such as an azelaic acid, and aromatic carboxylic acids such as terephthalic acid, salicylic acid and benzoic acid. Carboxylates may also be usable. One of the above examples may be singularly used or, alternatively, two or more thereof may be used in combination.

Examples of the alkali include metal hydroxides such as alkali metals and alkali earth metals. Examples of the metal include sodium, calcium, lithium and aluminum.

In the grease, a sulfur-containing extreme pressure agent is preferably blended at 0.01 mass% to 10 mass% of the total amount of the composition. When the blend ratio is less than 0.01 mass% or more than 10 mass%, blend effect such as seizure prevention cannot be expected.

Examples of the extreme pressure agent include zinc dialkyldithiophosphate (ZnDTP), zinc dithiocarbamate (ZnDTC), dithiocarbamine (DTC), thiophosphate, sulfurized fat and oil, and thiadiazole. One of these compounds may be singularly used or, alternatively, two or more thereof may be used in combination.

The base oil comprises a petroleum resin. The blend ratio of the resin is in a range from 0.5 mass% to 30 mass% of the total amount of the composition. When the blend ratio of the resin relative to the total amount of the composition is less than 0.5 mass%, the viscosity is likely to be reduced. When the blend ratio of the resin is more than 30 mass%, the low-temperature torque performance is likely to be lowered. In view of the above, the blend ratio of the resin relative to the total amount of the composition is preferably in a range from 1 mass% to 25 %mass, particularly preferably in a range from 2 mass% to 20 mass%.

The petroleum resin is preferably, for instance, a cyclopentadiene-based petroleum resin. In other words, the petroleum resin is preferably provided by thermally copolymerizing a cyclopentadiene material with an alpha-olefin material or a monovinyl aromatic hydrocarbon material, by hydrogenating these materials in a general method as needed, or by mixing these materials.

Usable as the cyclopentadiene material are cyclopentadiene, the polymer thereof, the alkyl substitute thereof, and the mixture of these materials. From an industrial point of view, it is advantageous to use a cyclopentadiene fraction (CPD fraction) containing a cyclopentadiene material, which is obtained by steam cracking of naphtha or the like, at approximately 30 mass% or more, preferably at approximately 50 mass% or more. The CPD fraction may contain an olefin monomer copolymerizable with these alicyclic dienes. Examples of the olefin monomer include aliphatic diolefins such as isoprene, piperylene and butadiene, and alicyclic olefins such as cyclopentene. Although the concentration of the above olefins is preferably minimized, a concentration of approximately 10 mass% or less per cyclopentadiene material is acceptable.

Examples of the alpha-olefin material (a material copolymerizable with the cyclopentadiene material) include alpha-olefins having 4 to 18, preferably 4 to 12, carbon atoms, and the mixtures thereof, among which a derivative of ethylene, propylene, 1-butene or the like, a paraffin wax resolvent, or the like is preferably used. It is industrially preferable to blend the alpha-olefin material at a ratio of less than approximately 4 mol per 1 mol of the cyclopentadiene material.

Examples of the monovinyl aromatic hydrocarbons (the other material copolymerizable with the cyclopentadienes) include styrene, o-, m-, p-vinyltoluene, and alpha-, beta-methylstyrene. The monovinyl aromatic hydrocarbons may contain indenes such as indene methylindene, and ethylindene, and it is industrially advantageous to use a so-called C9 fraction obtained by steam cracking of naphtha. When the monovinyl aromatic hydrocarbons are used as a material to be copolymerized, it is industrially preferable to blend the monovinyl aromatic hydrocarbons at a ratio less than approximately 3 mol per 1 mol of the cyclopentadienes.

The worked penetration of the grease composition is in a range from 220 to 350, preferably from 250 to 340, more preferably from 265 to 320, as measured according to JIS K 2220.7 at 25 degrees C and 60 W. When the worked penetration is less than 220, the grease becomes harder, so that the low-temperature torque performance is likely to be lowered. When the worked penetration is more than 350, the grease becomes softer, so that shaft wear and fretting wear are likely to occur.

As long as an object of the invention is achieved, the grease according to the exemplary embodiment may be added with additives such as antioxidant, rust inhibitor, solid lubricant, filler, oiliness agent, metal deactivator, water resistant agent, extreme pressure agent, antiwear agent, viscosity index improver and coloring agent if necessary. Examples of the antioxidant include aminic antioxidant such as alkylated diphenylamine, phenyl-alpha-naphthylamine and alkylated-alpha-naphthylamine, phenolic antioxidant such as 2,6-di-t-butyl-4-methylphenol and 4,4'-methylenebis(2,6-di-t-butylphenol), and peroxide decomposing agent of sulfur, ZnDTP or the like. The blend ratio thereof is usually in a range from 0.05 mass% to 10 mass%.

Examples of the rust inhibitor include sodium nitrite, sulfonate, sorbitan monooleate, fatty acid soap, amine compound, succinic acid derivative, thiadiazole, benzotriazole and benzotriazole derivative.

Examples of the solid lubricant include polyimide, PTFE, graphite, metal oxide, boron nitride, melamine cyanurate (MCA) and molybdenum disulfide. The above various additives may be blended singularly or in combination of some of them. The lubricant additive according to the invention is not intended to spoil such blend effect.

The grease composition having the above arrangement is favorably usable for a wind power generator 1. As shown in Fig. 1, the wind power generator 1 includes a blade 5, a main shaft 4 to which the blade 5 is fixed, an electricity generator 31 being driven by rotation of the main shaft 4, a nacelle 3 in which a main bearing 33 connected to the main shaft 4 and a yaw bearing 32 are housed, and a tower 2 that supports the nacelle 3. A pitch bearing 41 is connected to a blade shaft 51. For instance, by rotating the blade shaft 51, the blade 5 is controlled to receive more wind or less wind to stabilize the rotation of the main shaft 4. This results in stable supply of electricity from the electricity generator 31. The grease according to the exemplary embodiment is preferably used for the main bearing 33 and the pitch bearing 41. The main bearing 33 and the pitch bearing 41 are likely to suffer from shaft wear due to high loads such as the heavy blade 5 and main shaft 4 and fretting wear due to fluctuations or vibrations resulting from the rotation thereof. With the grease according to the exemplary embodiment, it is possible to prevent such shaft wear and fretting wear. Incidentally, if the wind power generator 1 is a small-sized wind power generator with an output less than 300 Kw, the invention is not suitably usable because of a small load thereon. The wind power generator 1 is preferably a middle-sized or large-sized wind power generator with an output of preferably 300 Kw or more, more preferably 700 Kw or more.

The main bearing 33 and the pitch bearing 41 may be connected to a pump for supplying grease thereto through a pipe (not shown). By driving the pump, it is possible to easily supply grease to the main bearing 33 and the pitch bearing 41. Working at height is thus not required, resulting in improvement of workability.

The grease having the above arrangement may be used for high load usage not only in a wind power generator but also in devices that perform rolling motion, such as rolling bearing, ball screw and linear guide. The grease is usable in, for instance, an electrical cylinder, an electrical linear actuator, a jack and a linear operating device.

### EXAMPLES

### Examples 1-6, Comparatives 1-3

### Production of Grease Composition

Grease compositions according to Examples and Comparatives were produced as follows. The composition ratio of each grease composition is shown in Tables 1 to 3. Table 4 shows the properties of each material shown in Tables 1 to 3.

### Examples 1-6

(1) PAO-A, 12-hydroxy stearic acid, azelaic acid and rust inhibitor (the respective amounts thereof are shown in Tables 1 and 2) were heated to 95 degrees C while being stirred in a reaction vessel.
(2) Lithium hydroxide (monohydrate) was dissolved in 5 parts water (mass ratio). The resulting aqueous solution and the solution of (1) were blended together and heated to be mixed. After being heated to 195 degrees C, the temperature of the mixture was maintained for five minutes. In Examples 8 and 9, after being heated to 170 degrees C, the temperature of the mixture was maintained for five minutes. In Example 6, after being heated to 185 degrees C, the temperature of the mixture was maintained for five minutes.
(3) After being blended with the rest of the base oil, the mixture was cooled down to 80 degrees C at a pace of 50 degrees C per hour, and then antioxidant and extreme pressure agent (the respective amounts thereof are shown in Tables 1 and 2) were added thereto.
(4) After being naturally cooled down to room temperature, the mixture was subjected to a finishing process using a three-roller device. In this manner, each of the grease compositions according to Examples 1 to 6 was obtained.

### Comparatives 1 and 2

(1) A part of PAO-B (50 mass% relative to the amount of the resulting grease) and 12-hydroxy stearic acid, azelaic acid and rust inhibitor (the respective amounts thereof are shown in Table 3) were heated to 95 degrees C while being stirred in a reaction vessel.
(2) Lithium hydroxide (monohydrate) was dissolved in 5 parts water (mass ratio). The resulting aqueous solution and the solution of (1) were blended together and heated to be mixed. After being heated to 195 degrees C, the temperature of the mixture was maintained for five minutes.
(3) After being blended with the rest of the base oil, the mixture was cooled down to 80 degrees C at a pace of 50 degrees C per hour, and then antioxidant and extreme pressure agent (the respective amounts thereof are shown in Table 3) were added thereto.
(4) After being naturally cooled down to room temperature, the mixture was subjected to a finishing process using a three-roller device. In this manner, each of the grease compositions according to Comparatives 1 and 2 was obtained.

### Comparative 3

(1) A part of PAO-A (50 mass% relative to the amount of the resulting grease) and 12-hydroxy stearic acid, azelaic acid and rust inhibitor (the respective amounts thereof are shown in Table 3) were heated to 95 degrees C while being stirred in a reaction vessel.
(2) Lithium hydroxide (monohydrate) was dissolved in 5 parts water (mass ratio). The resulting aqueous solution and the solution of (1) were blended together and heated to be mixed. After being heated to 195 degrees C, the temperature of the mixture was maintained for five minutes.
(3) After being blended with the rest of the base oil, the mixture was cooled down to 80 degrees C at a pace of 50 degrees C per hour, and then antioxidant and extreme pressure agent (the respective amounts thereof are shown in Table 3) were added thereto.
(4) After being naturally cooled down to room temperature, the mixture was subjected to a finishing process using a three-roller device to obtain the grease composition according to Comparative 3.

Incidentally, when the content of an olefin oligomer is more than 70 mass%, it is necessary to add a low-viscosity oil with a slight amount of a polymer base oil to increase the viscosity thereof, which complicates viscosity control.

**Table 1**

| | | | | Example 1 | Example 2 | Example 3 | Example 4 |
|---|---|---|---|---|---|---|---|
| Composition Ratio (mass%) | Base Oil | Hydrocarbon-based Synthetic Oil | PAO-A | 51.25 | 52.36 | 54.21 | 56.10 |
| | | | PAO-B | - | - | - | - |
| | | | PAO-C | - | - | - | - |
| | | | Olefin Oligomer | 17.74 | 18.12 | 18.77 | 19.42 |
| | | Other Base Oil | Petroleum Resin | 9.86 | 10.07 | 10.43 | 10.79 |
| | Thickener | | 12-Hydroxy Stearic Acid | 9.00 | 7.50 | 5.00 | 2.50 |
| | | | Azelaic Acid | 4.00 | 4.00 | 4.00 | 4.00 |
| | | | Lithium hydroxide (Monohydrate) | 3.15 | 2.95 | 2.60 | 2.20 |
| | | | Thickener Blend Ratio (Carboxylic Acid Amount Equivalent) | 13.00 | 11.50 | 9.00 | 6.50 |
| | Additive | | Antioxidant | 1.00 | 1.00 | 1.00 | 1.00 |
| | | | Rust Inhibitor | 1.00 | 1.00 | 1.00 | 1.00 |
| | | | Extreme Pressure Agent | 3.00 | 3.00 | 3.00 | 3.00 |
| | Total | | | 100.00 | 100.00 | 100.00 | 100.00 |
| Properties of Grease Composition | Kinematic Viscosity of Base Oil (40°C) (mm²/s) | | | 460 | 460 | 460 | 460 |
| | Worked Penetration 25°C, mixed 60 times | | | 250 | 271 | 293 | 323 |
| | Dropping Point (°C) | | | 273 | 290 or more | 290 or more | 290 or more |
| Evaluation Results | Fretting Wear Test (ASTM D4170 method) (mg) | | | 17.0 | 7.4 | 2.5 | 1.7 |
| | Low-temperature Torque Test (-40°C) (mN·m) | | | 680/250 | 620/200 | 490/150 | 420/130 |
| | High-load Shaft Bearing Wear Test | | | | | | |
| | Rolling Element Wear Amount (mg) | | | - | - | 7 | - |
| | Bearing Ring Wear Amount m₅₀ (mg) | | | - | - | 5 | - |
| | Retainer Wear Amount mₖ₅₀ (mg) | | | - | - | 28 | - |
| | Grease Pumpability | | | - | - | 24.9 | - |
| | Pump Discharge Pressure (MPa) | | | | | | |
| | Oil Separation after Pressurization (IP121 method) 40°C, 42h (mass%) | | | 0.2 | 0.9 | 1.1 | 1.6 |

**Table 2**

| | | | | Example 5 | Example 6 |
|---|---|---|---|---|---|
| Composition Ratio (mass%) | Base Oil | Hydrocarbon-based Synthetic Oil | PAO-A | 54.21 | 48.57 |
| | | | PAO-B | - | **-** |
| | | | PAO-C | - | - |
| | | | Olefin Oligomer | 18.77 | - |
| | | Other Base Oil | Petroleum Resin | 10.43 | 34.83 |
| | Thickener | | 12-Hydroxy Stearic Acid | 5.00 | 5.00 |
| | | | Azelaic Acid | 4.00 | 4.00 |
| | | | Lithium hydroxide (Monohydrate) | 2.60 | 2.60 |
| | | | Thickener Blend Ratio (Carboxylic Acid Amount Equivalent) | 9.00 | 9.00 |
| | Additive | | Antioxidant | 1.00 | 1.00 |
| | | | Rust Inhibitor | 1.00 | 3.00 |
| | | | Extreme Pressure Agent | 3.00 | 1.00 |
| | Total | | | 100.00 | 100.00 |
| Properties of Grease Composition | Kinematic Viscosity of Base Oil (40°C) (mm²/s) | | | 220 | 460 |
| | Worked Penetration 25°C, mixed 60 times | | | 293 | 283 |
| | Dropping Point (°C) | | | 290 or more | 290 or more |
| Evaluation Results | Fretting Wear Test (ASTM D4170 method) (mg) | | | 2.3 | 2.4 |
| | Low-temperature Torque Test (-40°C) (mN·m) | | | 320/100 | 2900/2600 |
| | High-load Shaft Bearing Wear Test | | | | |
| | Rolling Element Wear Amount m_{w50} (mg) | | | 14 | - |
| | Bearing Ring Wear Amount m₅₀ (mg) | | | 15 | - |
| | Retainer Wear Amount mₖ₅₀ (mg) | | | 53 | - |
| | Grease Pumpability | | | 22.6 | - |
| | Pump Discharge Pressure (MPa) | | | | |
| | Oil Separation after Pressurization (IP121 method) 40°C, 42h (mass%) | | | 1.9 | 0.7 |

**Table 3**

| | | | | Comparative 1 | Comparative 2 | Comparative 3 |
|---|---|---|---|---|---|---|
| Composition Ratio (mass%) | Base Oil | Hydrocarbon-based Synthetic Oil | PAO-A | - | 13.28 | 83.40 |
| | | | PAO-B | 69.86 | 58.92 | - |
| | | | PAO-C | - | - | - |
| | | | Olefin Oligomer | 1.79 | - | - |
| | | Other Base Oil | Petroleum Resin | - | - | - |
| | Thickener | | 12-Hydroxy Stearic Acid | 14.00 | 13.50 | 5.00 |
| | | | Azelaic Acid | 5.00 | 5.00 | 4.00 |
| | | | Lithium hydroxide (Monohydrate) | 4.35 | 4.30 | 2.60 |
| | | | Thickener Blend Ratio (Carboxylic Acid Amount Equivalent) | 19.00 | 18.50 | 9.00 |
| | Additive | | Antioxidant | 1.00 | 1.00 | 1.00 |
| | | | Rust Inhibitor | 1.00 | 1.00 | 1.00 |
| | | | Extreme Pressure Agent | 3.00 | 3.00 | 3.00 |
| | Total | | | 100.00 | 100.00 | 100.00 |
| Properties of Grease Composition | Kinematic Viscosity of Base Oil (40°C) (mm²/s) | | | 460 | 220 | 30 |
| | Worked Penetration 25°C, mixed 60 times | | | 294 | 288 | 290 |
| | Dropping Point (°C) | | | 265 | 2.66 | 290 or more |
| Evaluation Results | Fretting Wear test (ASTM D4170 method) (mg) | | | 43.6 | 34.3 | 1.9 |
| | Low-temperature Torque Test (-40°C) (mN·m) | | | 1460/1200 | 420/220 | 130/38 |
| | High-load Shaft Bearing Wear Test | | | | | |
| | Rolling Element Wear Amount m_{w50} (mg) | | | 20 | - | 56 |
| | Bearing Ring Wear Amount m₅₀) (mg) | | | 27 | - | 46 |
| | Retainer Wear Amount mₖ₅₀ (mg) | | | 65 | - | 166 |
| | Grease Pumpability | | | 29.6 | 31.0 | |
| | Pump Discharge Pressure (MPa) | | | | | |
| | Oil Separation after Pressurization (IP121 method) 40°C, 42h (mass%) | | | 1.2 | 2.0 | 16.3 |

**Table 4**

| | |
|---|---|
| Antioxidant | p,p'-dioctyldiphenylamine |
| Rust Inhibitor | calcium sulfonate |
| Extreme Pressure Agent | zinc diamyldithiocarbamate |
| PAO-A | polyalpha-olefin, kinematic viscosity (40°C): 30.1mm²/s, kinematic viscosity (100°C): 5.78mm²/s |
| PAO-B | polyalpha-olefin, kinematic viscosity (40°C): 402mm²/s, kinematic viscosity (100°C): 40.6mm²/s |
| PAO-C | polyalpha-olefin, kinematic viscosity (40°C): 3100mm²/s, kinematic viscosity (100°C): 300mm²/s |
| Olefin Oligomer | LUCANT HC-2000 (product name: manufactured bv Mitsui Chemicals, Inc.) |
| Petroleum Resin | dicyclopentadiene / aromatic copolymer-based hydrogenated petroleum resin softening point 100°C, average molecular weight: 660, density (20°C): 1.03g/cm³, bromine number: 2.5g/100g |

In Tables 1 to 3, the blend ratio of the thickener has been defined as the amount of the carboxylic acid (12-hydroxy stearic acid + azelaic acid).

### Evaluation Method

The properties and wear resistance of each of the grease compositions according to above Examples and Comparatives were evaluated. Specific evaluation conditions were as follows.
(1) Worked Penetration: Measurement was made in a method according to JIS K 2220.7 (25 degrees C, 60W).
(2) Dropping Point: Measurement was made in a method according to JIS K 2220.8.
(3) Fretting Wear Test: Measurement was made in a method according to ASTM D4170. The composition was set in a laboratory whose temperature was controlled to (22±2 degrees C). The temperature of the laboratory was not controlled after the test was started.
(4) Low-temperature Torque Test: Measurement was made in a method according to JIS K 2220.18. The temperature was set at -40 degrees C for the measurement.
(5) High-load Shaft Bearing Wear Test: Measurement was made in a method according to DIN51819-2.
(Test Conditions: DIN51819-2-C-75/50-120, Load: 50 KN, Temperature: 120 degrees C, Rotation Speed: 75 rpm) The respective weights of bearing ring (inner ring + outer ring), rolling element (assembly of 16 rollers) and retainer were measured before and after the test, and a weight reduction for each bearing was calculated as a value of 50% probability of wear according to DIN51819-2.11.
(6) Oil Separation after Pressurization: Measurement was made in a method according to IP121 (40 degrees C, 42h).
(7) Grease Pumpability: Evaluation was made in terms of a discharge pressure at the time when grease was pushed out using an automatic grease-supplying pump. A manometer (for discharge pressure measurement) and a 4mm inner diameter pipe (10 m) were connected in this sequence to a grease outlet of the automatic grease-supplying pump (manufactured by LINCOLN INDUSTRIAL CORPORATION, Quicklub Pump model 203), and a distributor was also used to divide it into two systems. A pipe of 4mm inner diameter × 4m length was connected to each system. The grease was discharged through this pipe and a relief valve (12MPa). The pump and pipes were filled with the grease in a room whose temperature was controlled to 20 to 25 degrees C, and the pump was driven for two hours after the discharge pressure thereof was stabilized. An average discharge pressure (MPa) during the two-hour driving was measured. A grease requiring a smaller discharge pressure is superior in pumpability because such a grease can be pushed out with a smaller pressure.

### Evaluation Results

As is apparent from the results shown in Tables 1 to 3, it has been found that the grease compositions according to Examples 1 to 6 are excellent in bearing wear properties and fretting wear properties. Additionally, it has been found that, in particular, the grease compositions according to Examples 3 and 5 are excellent also in low-temperature torque performance, and thus are suitably usable for a wind power generator or the like installed outside. On the other hand, according to Comparative 1, the blend ratio of the component A in the base oil was less than 20 mass%, which resulted in lowered fretting wear properties and pumpability and increased low-temperature torque. According to Comparative 1, the component A was not blended, which resulted in lowered fretting wear properties and pumpability. According to Comparative 3, bearing wear was increased to reduce oil separation.

### INDUSTRIAL APPLICABILITY

The invention is suitable as a grease composition usable for a main bearing and a pitch bearing incorporated in a wind power generator or the like.

### EXPLANATION OF CODES

1...wind power generator, 2...tower, 3...nacelle, 4...main shaft, 5...blade, 31... electricity generator, 32...yaw bearing, 33...main bearing, 41...pitch bearing, 51...blade shaft

## Claims

1. A grease composition comprising:
a base oil having a kinematic viscosity in a range from 200 mm²/s to 2000 mm²/s at 40°C; and
a soap thickener that is blended in the grease composition at 17 mass% or less of a total amount of the composition, wherein the blend ratio of the soap thickener is represented by the amount of carboxylic acid constituting the thickener, and wherein
the base oil comprises
a. a hydrocarbon-based synthetic oil at 40 mass% or more of the base oil, wherein the hydrocarbon-based synthetic oil comprises a component A having a kinematic viscosity of 10 mm²/s to 40 mm²/s at 40 °C and being an olefin oligomer or a mixture of olefin oligomers, the amount of the component A being from 20 mass% to 70 mass% of the base oil,
b. a petroleum resin that is blended in the base oil in an amount of 0.5 mass% to 30 mass% of the total amount of the composition;
wherein a worked penetration of the grease composition is in a range from 220 to 350 as measured according to JIS K 2220.7 at 25 degrees C and 60 W.

2. The grease composition according to claim 1, wherein a sulfur-containing extreme pressure additive is blended in the grease composition at 0.01 mass% to 10 mass% of the total amount of the composition.

3. The grease composition according to any one of claims 1 to 2, wherein the thickener is prepared by a saponification of a carboxylic acid with an alkali in the component A.

4. Use of the grease composition according to any one of claims 1 to 3 for at least one of a main bearing and a pitch bearing, the main bearing being connected to a main shaft to which a blade of a wind power generator is coupled, the pitch bearing being connected to a blade shaft incorporated in the blade.

## Patentansprüche

1. Fettzusammensetzung, umfassend:
ein Basisöl mit einer kinematischen Viskosität im Bereich von 200 mm²/s bis 2.000 mm²/s bei 40°C; und
ein Seife-Verdickungsmittel, das in die Fettzusammensetzung in einer Menge von 17 Masse-% oder weniger der Gesamtmenge der Zusammensetzung eingemischt ist, worin das Mischungsverhältnis des Seife-Verdickungsmittel durch die Menge an Carbonsäure dargestellt wird, die das Verdickungsmittel aufbaut, und worin
das Basisöl umfasst
a. ein auf Kohlenwasserstoff basierendes Synthetiköl in einer Menge von 40 Masse-% oder mehr des Basisöls, worin das auf Kohlenwasserstoff basierende Synthetiköl eine Komponente A umfasst, die eine kinematische Viskosität von 10 mm²/s bis 40 mm²/s bei 40°C aufweist und die ein Olefin-Oligomer oder eine Mischung von Olefin-Oligomeren ist, worin die Menge der Komponente A 20 Masse-% bis 70 Masse-% des Basisöls ausmacht,
b. ein Petroleumharz, das in das Basisöl in einer Menge von 0,5 Masse-% bis 30 Masse-% der Gesamtmenge der Zusammensetzung eingemischt ist;
worin die Walkpenetration der Fettzusammensetzung im Bereich von 220 bis 350 liegt, gemessen entsprechend JIS K 2220,7 bei 25°C und 60 W.

2. Fettzusammensetzung gemäß Anspruch 1, worin ein schwefelhaltiges Extremdruckadditiv in die Fettzusammensetzung in einer Menge von 0,01 Masse-% bis 10 Masse-% der Gesamtmenge der Zusammensetzung eingemischt ist.

3. Fettzusammensetzung gemäß irgendeinem der Ansprüche 1 bis 2, worin das Verdickungsmittel hergestellt ist durch Verseifen einer Carbonsäure mit einem Alkalimittel in der Komponente A.

4. Verwendung der Fettzusammensetzung gemäß irgendeinem der Ansprüche 1 bis 3 für zumindest eines von einem Hauptlager und einem Blattlager, worin das Hauptlager mit einem Hauptschaft verbunden ist, an welchen ein Rotorblatt eines Windstromgenerators gekoppelt ist, und worin das Blattlager mit einem Blattschaft verbunden ist, der in das Rotorblatt eingearbeitet ist.

## Revendications

1. Composition de graisse comprenant :
une huile de base ayant une viscosité cinématique dans une plage de 200 mm²/s à 2 000 mm²/s à 40 °C ;
et
un épaississant à texture de savon qui est mélangé dans la composition de graisse à 17 % en masse ou moins d'une quantité totale de la composition, dans laquelle le rapport de mélange de l'épaississant à texture de savon est représenté par la quantité d'acide carboxylique constituant l'épaississant, et dans laquelle
l'huile de base comprend
a. une huile hydrocarbonée de synthèse à 40% en masse ou plus de l'huile de base, dans laquelle l'huile hydrocarbonée de synthèse comprend un composant A ayant une viscosité cinématique de 10 mm²/s à 40 mm²/s à 40 °C et étant un oligomère d'oléfine ou un mélange d'oligomères d'oléfines, la quantité du composant A étant de 20 % en masse à 70 % en masse de l'huile de base,
b. une résine de pétrole qui est mélangée dans l'huile de base en une quantité de 0,5 % en masse à 30 % en masse de la quantité totale de la composition ;
dans laquelle une pénétration travaillée de la composition de graisse se trouve dans une plage de 220 à 350 telle que mesurée selon JIS K 2220.7 à 25 °C et 60 W.

2. Composition de graisse selon la revendication 1, dans laquelle un additif extrême-pression contenant du soufre est mélangé dans la composition de graisse à 0,01 % en masse à 10 % en masse de la quantité totale de la composition.

3. Composition de graisse selon l'une quelconque des revendications 1 à 2, dans laquelle l'épaississant est préparé par saponification d'un acide carboxylique avec un alcali dans le composant A.

4. Utilisation de la composition de graisse selon l'une quelconque des revendications 1 à 3 pour au moins l'un d'un roulement principal et d'un roulement de pas, le roulement principal étant raccordé à un arbre principal auquel une pale d'une génératrice éolienne est couplée, le roulement de pas étant raccordé à un arbre à pale incorporé dans la pale.
